# FASCICULE DE BREVET EUROPEEN

(11) **EP 1 650 483 B1**
(45) Date de publication et mention de la délivrance du brevet: **07.01.2009**
(21) Numéro de dépôt: 05292214.3
(22) Date de dépôt: 21.10.2005
(51) Int. Cl.: F16L 11/115, F16L 25/00

(54) **Flexible souple pour un circuit de climatisation de véhicule à moteur**
Flexible Schlauchleitung für Klimakreislauf eines Kraftfahrzeugs
Flexible hose line for air conditioning circuit of a motor vehicle

(30) Priorité: 22.10.2004 FR 0411255; 17.03.2005 FR 0502634
(43) Date de publication de la demande: 26.04.2006
(73) Titulaire: HUTCHINSON, 75008 Paris (FR)
(72) Inventeur: Simon, Jean-Michel, 92320 Chatillon (FR); Ciolczyk, Jean-Pierre, 45200 Montargis (FR); Mamie, Magalie, 45200 Montargis (FR)
(74) Mandataire: Bolinches, Michel Jean-Marie

(56) Documents cités:
- EP-A- 0 332 853
- EP-A- 1 394 457
- DE-A1- 4 238 605
- US-A- 5 601 893
- US-A1- 2004 020 546

## Description

L'invention concerne un flexible souple pour un circuit de climatisation de véhicule automobile où le fluide réfrigérant est du fréon.

Tous les flexibles souples selon l'art antérieur, en particulier ceux divulgués par les documents US-5,413,147 (PARKER) et US-5,089,074 (DAYCO), présentent notamment des structures complexes et donc d'un coût de fabrication élevé.

Dans le document US-5,413,147 précité, le flexible souple comprend au moins quatre éléments, à savoir : un tube interne corrugué réalisé en un matériau polymérique, une couche intermédiaire en un matériau élastomère, tel qu'un polyéthylène chloré CM, une couche tissée de fibres de renforcement, et une couche externe en caoutchouc élastomère, tel qu'un polyéthylène chloré CM.

Dans le document US-5,089,074 précité, le flexible souple comprend un tube interne corrugué constitué par la superposition de deux couches interne et externe en deux matériaux thermoplastiques différents, un second tube extrudé sur le tube interne, une couche de renforcement rapportée sur le second tube, et une couche externe de protection.

Le document DE-A-42 38 605 considéré comme l'état de la technique le plus proche de la revendication 1 décrit un flexible souple constitué par un tube interne corrugué en matière thermoplastique, une couche de renfort intermédiaire rapportée sur les ondulations du tube interne et une couche externe de protection étant en un matériau élastomère thermoplastique étanche à la vapeur d'eau.

Un but de l'invention est de concevoir un flexible souple dont la structure soit simple, de manière à lui donner une étanchéité de qualité supérieure à celle des flexibles de l'art antérieur et avec un coût de fabrication qui est sensiblement plus faible que celui des flexibles de l'art antérieur.

A cet effet, l'invention propose un flexible pour un circuit de climatisation de véhicule à moteur, ce flexible étant constitué par un tube interne corrugué réalisé en matière thermoplastique au contact du fluide transporté et présentant des ondulations d'une hauteur inférieure à 2mm, une couche de renfort intermédiaire rapportée sur les ondulations du tube interne corrugué et ne pénétrant pas dans ces ondulations, et une couche externe de protection adhérisée ou non sur la couche de renfort intermédiaire et réalisé en un matériau élastomère thermoplastique étanche à la vapeur d'eau avec une épaisseur comprise entre 0,6 et 1,5mm et une perméabilité inférieure à 40g/m²/72h, et comprenant, à au moins une extrémité, un embout tubulaire rigide inséré en partie à l'intérieur du tube corrugué,une bague de sertissage rapportée autour de la couche externe de protection et des moyens pour assurer l'étanchéité qui sont constitués par un élément en un matériau élastomère formant une réserve d'élasticité, ayant une épaisseur comprise entre 1,5 et 2,5mm.

Selon un exemple de réalisation, le tube interne corrugué est lisse à au moins une extrémité du flexible et présente un diamètre extérieur sensiblement égal au diamètre externe des ondulations du tube interne corrugué pour limiter les pertes de charge.

D'une manière générale, l'élément formant une réserve élastique est placé entre la bague de sertissage et la couche externe du flexible ou entre l'embout tubulaire rigide et le tube interne corrugué.

Selon d'autres caractéristiques de l'invention :
- le tube interne corrugué peut être réalisé à partir d'une matière thermoplastique choisie dans le groupe comprenant notamment le PA 6 et le PA 66 ;
- la couche de renfort intermédiaire peut être une nappe textile tressée ou guipée, ou une nappe métallique ;
- la couche externe de protection peut être réalisée en VEGAPRENE, ou à partir d'un matériau élastomère thermoplastique tel qu'un TPO (EPDM/PP, NBR/PP, IIR/PP) ou un TPU ;
- le tube interne corrugué peut avoir une épaisseur de l'ordre de 0,5mm et peut avoir une structure multicouche et/ou être traité au plasma par exemple ; et/ou
- l'élément d'étanchéité peut être un manchon en caoutchouc.

A titre d'exemple, le tube interne corrugué a une épaisseur de l'ordre de 0,5mm avec des ondulations d'une hauteur inférieure à 2mm, et la couche externe de protection une épaisseur comprise entre 0,5mm et 1,5mm, avantageusement de l'ordre de 0,8mm.

L'invention a également pour objet un circuit de climatisation comprenant au moins un flexible souple ayant au moins l'une des caractéristiques précitées.

D'autres avantages, caractéristiques et détails de l'invention ressortiront du complément de description qui va suivre en référence à des dessins annexés, donnés uniquement à titre d'exemple et dans lesquels :

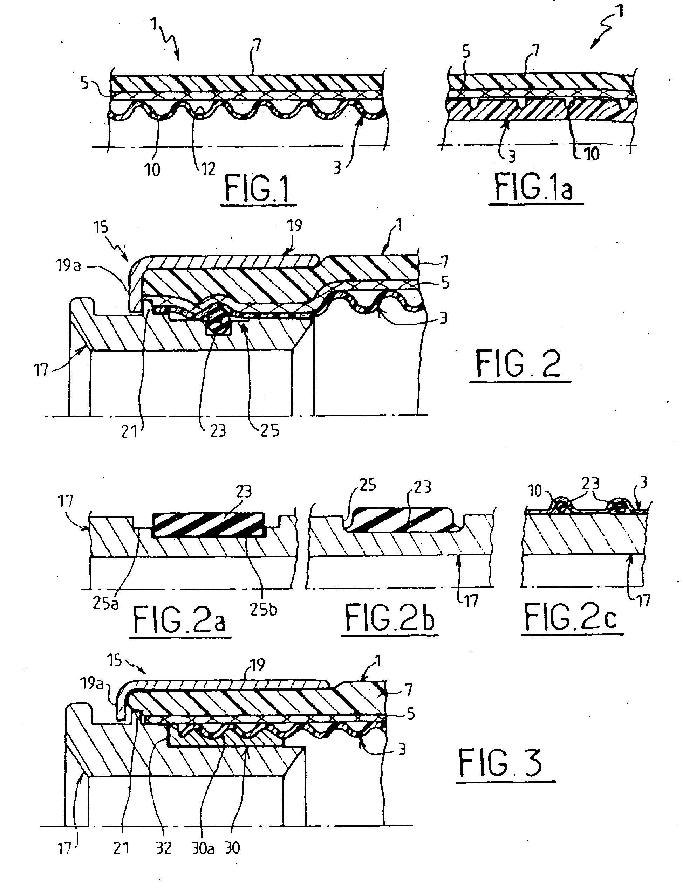

- la figure 1 est une demi-vue en coupe longitudinale d'une portion d'un flexible souple selon l'invention ;
- la figure 1 a est une demi-vue en coupe longitudinale d'un flexible selon une variante de réalisation de l'invention ;
- la figure 2 est une demi-vue en coupe d'une extrémité du flexible souple de la figure 1 équipée d'un dispositif de raccordement étanche selon un premier exemple de réalisation ;
- les figures 2a à 2c sont des demi-vues en coupe partielle pour illustrer des variantes de réalisation des moyens d'étanchéité du dispositif de raccordement étanche de la figure 2 ;
- la figure 3 est une demi-vue en coupe d'une extrémité du flexible souple de la figure 1 équipée d'une variante de réalisation du dispositif de raccordement étanche de la figure 2 ; et
- la figure 4 est une demi-vue en coupe d'une extrémité du flexible souple de la figure 1 équipée d'un dispositif de raccordement étanche selon un second mode de réalisation.

Le flexible souple 1 selon l'invention et tel que représenté à la figure 1 pour un circuit de climatisation de véhicule à moteur, est d'une structure très simplifiée par rapport à celle des flexibles souples selon l'art antérieur.

En effet, le flexible souple 1 est un élément tubulaire ne comprenant que trois éléments, à savoir : un tube interne corrugué 3 au contact du fluide transporté qui est du fréon, une couche de renfort intermédiaire 5 et une couche externe de protection 7.

Le tube interne corrugué 3 présente des ondulations 10 dont la hauteur h est de préférence inférieure à 2mm. D'une manière générale, le tube interne corrugué 1 est réalisé à partir d'une matière thermoplastique d'une épaisseur de l'ordre de 0,5mm et qui est avantageusement choisie dans le groupe comprenant notamment les polyamides (en particulier le PA 6 ; le PA 4,6 ; le PA 6,6 et le PA 12), un polyester aliphatique tel qu'un PBT (terephtalate de polybutylène), et un alliage PPO/PA (alliage d'oxyde de polyphénylène et de polyamide).

Selon une variante de réalisation du flexible selon l'invention illustrée à la figure 1a, le tube interne 3 présente une surface interne sensiblement lisse et une surface externe corruguée avec des ondulations 10, ce qui permet de limiter les pertes de charge.

La couche de renfort intermédiaire 5 est rapportée sur les ondulations 10 du tube interne 3 mais sans pénétrer dans le creux 12 des ondulations 10. Cette couche de renfort intermédiaire 5 peut être réalisée soit par une nappe textile tissée ou guipée, soit par une nappe métallique.

La couche externe de protection 7 peut avoir une épaisseur pouvant aller de 0,6 à 1,5mm, avantageusement de l'ordre de 0,8mm, est réalisée à partir d'un matériau élastomère thermoplastique TPE étanche à l'eau avec une perméabilité inférieure à 40g/m²/72h, et peut être adhérisée ou non sur la couche de renfort intermédiaire 5, une adhérisation permettant d'améliorer la tenue en fatigue du flexible. Avantageusement, la couche externe 7 est réalisée à partir de VEGAPRENE (élastomère réticulé à transformation thermoplastique qui comprend au moins un élastomère à polymérisation par un catalyseur métallocène et une polyoléfine greffée).

La couche externe de protection 7 peut être également fabriquée à partir d'un matériau élastomère thermoplastique choisi parmi les matériaux suivants :
- des copolymères séquencés styrène-butadiène (SBS), styrène-éthylène-butène (SEBS) ou styrène-isoprène (SIS) ;
- des élastomères thermoplastiques dérivés des polyoléfines (TPO) tels que par exemple un EPDM/PP, un NBR/PP ou un IIR/PP ;
- des polyuréthannes thermoplastiques (TPU) ;
- des élastomères thermoplastiques de polyesters (CPE) ; ou
- des élastomères thermoplastiques de polyéther-ester blocs amides (CPA).

Un dispositif de raccordement étanche 15 est monté à au moins une extrémité du flexible 1.

Selon un premier mode de réalisation illustré à la figure 2, le dispositif de raccordement étanche 15 comprend notamment un embout tubulaire rigide 17 qui est en partie inséré à force à l'intérieur de l'extrémité du flexible 1, et une bague de sertissage 19 qui est en partie rapportée sur la couche externe de protection 7 du flexible 1, cette bague 19 se trouvant en regard de l'embout 17. La bague 19 est sertie en direction de l'embout 17 et son extrémité libre 19a est rabattue sensiblement à 90° pour venir au contact d'un bossage périphérique 21 de l'embout 17. L'opération de sertissage a notamment pour effet de comprimer la couche externe de protection 7 du flexible 1 et d'aplanir en partie les ondulations 10 du tube interne corrugué 3 du flexible 1.

L'étanchéité du dispositif de raccordement 15 peut être assurée par au moins un élément 23 réalisé en un matériau élastomère qui peut être par exemple soit un joint torique en caoutchouc (figure 2), soit un manchon en caoutchouc (figure 2a). Avantageusement, l'élément d'étanchéité 23 vient se loger dans une gorge périphérique annulaire 25 ménagée dans l'embout rigide 17, cette gorge 25 étant réalisée sous la forme d'un double lamage, c'est-à-dire présentant deux fonds 25a et 25b. L'élément d'étanchéité 23 se positionne dans le fond de la gorge 25b, et la gorge 25a évite à l'élément d'étanchéité 23 de rouler lors de l'insertion de l'embout 17 à l'intérieur du flexible 1, en particulier lorsque l'élément d'étanchéité 23 est un joint torique.

L'étanchéité du dispositif de raccordement 15 peut être également assurée par au moins un élément 23 réalisé en un matériau élastomère, du caoutchouc par exemple, qu est surmoulé dans une gorge périphérique 25 ménagée dans l'embout rigide 17, comme cela est illustré à la figure 2b.

L'étanchéité du dispositif de raccordement 15 peut être également assurée par au moins un élément 23 réalisé en un matériau élastomère sous la forme d'un joint torique en caoutchouc par exemple qui vient se loger dans le creux d'une ondulation 10 du tube interne corrugué 3 et s'appliquer sur l'embout rigide 17, comme cela est illustré à la figure 2c.

Selon une variante de réalisation illustrée à la figure 3, le dispositif de raccordement étanche 15 comprend notamment une bague d'étanchéité 30 qui est rapportée sur l'embout rigide 17 jusqu'à venir en butée sur un épaulement 32 de l'embout 17. La surface périphérique de la bague 30 présente des ondulations 30a qui ont une forme complémentaire à celles du tube interne corrugué 3, de manière à créer un contact étanche après sertissage de la bague 19.

L'étanchéité du dispositif de raccordement 15 (figures 2 et 3), pourrait être aussi assurée par un mastic-colle dont on aurait enduit préalablement la surface externe de l'embout rigide 17 en contact avec la surface interne du tube corrugué 3.

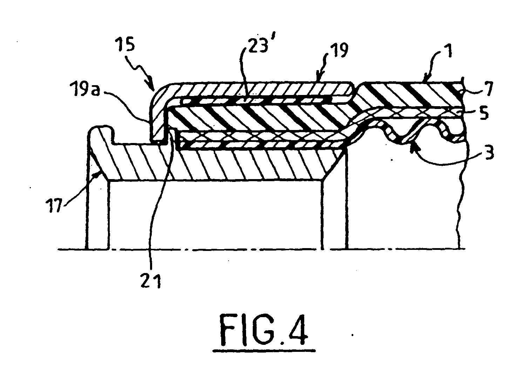

Dans un second mode de réalisation du dispositif de raccordement étanche 15 illustré à la figure 4, l'étanchéité n'est plus assurée par un élément 23 situé entre l'embout tubulaire rigide 17 et le tube interne corrugué 3, mais par un élément 23' situé entre la bague de sertissage 19 et la couche externe de protection 7 du flexible. Autrement dit, l'élément d'étanchéité n'est plus situé à l'intérieur mais à l'extérieur du flexible. De préférence, l'extrémité du tube interne corrugué 3 peut être lisse pour favoriser l'opération de sertissage effectuée sur la bague 19, et présente alors un diamètre extérieur qui est sensiblement égal au diamètre extérieur des ondulations 10 pour limiter les pertes de charge.

L'élément d'étanchéité 23' peut être réalisé en un matériau élastomérique en caoutchouc tel que l'EPDM par exemple, et se présenter sous la forme d'un manchon dont l'épaisseur peut être comprise entre 1 mm et 3mm, et de préférence entre 1,5 et 2,5mm.

D'une manière générale, tant l'élément d'étanchéité interne 23 que l'élément d'étanchéité externe 23' forment une réserve élastique, c'est-à-dire des moyens déformables aptes à compenser la relaxation des couches interne 3 et externe 7 du flexible, réalisées en un matériau thermoplastique, sous la déformation qui est imposée par la bague de sertissage 19.

## Revendications

1. Flexible souple pour un circuit de climatisation de véhicule à moteur, ce flexible étant constitué par un tube interne corrugué (3) réalisé en matière thermoplastique au contact du fluide transporté et présentant des ondulations d'une hauteur inférieure à 2mm, une couche de renfort intermédiaire (5) rapportée sur les ondulations (10) du tube interne corrugué (3) et ne pénétrant pas dans ces ondulations, et une couche externe de protection (7) adhérisée ou non sur la couche de renfort intermédiaire (5) et réalisée en un matériau élastomère thermoplastique étanche à la vapeur d'eau avec une épaisseur comprise entre 0,6 et 1,5mm et une perméabilité inférieure à 40g/m²/72h, et comprenant, à au moins une extrémité, un embout tubulaire rigide (17) inséré en partie à l'intérieur du tube corrugué (3), une bague de sertissage (19) rapportée autour de la couche externe de protection (7) et des moyens (23 ; 23') pour assurer l'étanchéité qui sont constitués par un élément (23') en un matériau élastomère formant une réserve d'élasticité, ayant une épaisseur comprise entre 1,5 et 2,5mm.

2. Flexible selon la revendication 1, dans lequel le tube interne corrugué (3) est lisse à au moins une extrémité du flexible et présente un diamètre extérieur sensiblement égal au diamètre externe des ondulations (10) du tube interne corrugué pour limiter les pertes de charge.

3. Flexible selon la revendication 1 ou 2, dans lequel l'élément (23 ; 23') formant une réserve élastique est placé entre la bague de sertissage et la couche externe du flexible ou entre l'embout tubulaire rigide et le tube interne corrugué.

4. Flexible selon l'une des revendications précédentes, dans lequel le tube interne corrugué (3) est réalisé à partir d'une matière thermoplastique choisie dans le groupe comprenant notamment le PA 6 et le PA 6,6.

5. Flexible selon l'une des revendications précédentes, dans lequel la couche de renfort intermédiaire (5) est une nappe textile tressée ou guipée.

6. Flexible selon l'une des revendications 1 à 4, dans lequel la couche de renfort intermédiaire (5) est une nappe métallique.

7. Flexible selon l'une des revendications précédentes, dans lequel la couche externe de protection (7) est réalisée en un élastomère réticulé à transformation thermoplastique, tel que le VEGAPRENE®, qui comprend au moins un élastomère à polymérisation par un catalyseur métallocène et une polyoléfine greffée.

8. Flexible selon l'une des revendications 1 à 6, dans lequel la couche externe de protection (7) est réalisée à partir d'un matériau élastomère thermoplastique tel qu'un TPO (EPDM/PP, NBR/PP, IIR/PP) ou un TPU.

9. Flexible selon l'une des revendications précédentes, dans lequel le tube interne corrugué (3) a une épaisseur de l'ordre de 0,5mm.

10. Flexible selon l'une des revendications précédentes, dans lequel l'élément d'étanchéité (23) est un manchon en caoutchouc.

11. Flexible selon l'une des revendications précédentes, dans lequel le tube interne corrugué (3) est un tube multicouche et/ou traité au plasma par exemple.

12. Circuit de climatisation, en particulier pour véhicule à moteur, **caractérisé en ce qu'**il comprend au moins un flexible souple (1) tel que défini par l'une des revendications précédentes.

## Claims

1. Flexible hose for an air conditioning circuit of a motor vehicle, this hose consisting of a corrugated inner tube (3) made of thermoplastic material which is in contact with the fluid being carried and having undulations less than 2 mm in height, an intermediate reinforcing layer (5) applied to the undulations (10) of the corrugated inner tube (3) and not penetrating into these undulations, and an outer protective layer (7) which is or is not adhered to the intermediate reinforcing layer and which is made of a thermoplastic elastomeric material impervious to water vapour, with a thickness of between 0.6 and 1.5 mm and having a permeability of less than 40 g/m²/72h, and comprising, at at least one end, a rigid tubular end piece (17) partly inserted into the corrugated tube (3), a crimping ring (19) fitted around the outer protective layer (7) and sealing means (23; 23') which consist of an element (23') made of an elastomeric material forming a reserve of elasticity and having a thickness of between 1.5 and 2.5 mm.

2. Flexible hose according to claim 1, wherein the corrugated inner tube (3) is smooth at at least one end of the hose and has an external diameter which is substantially equal to the external diameter of the undulations (10) of the corrugated inner tube to limit losses of charge.

3. Flexible hose according to claim 1 or 2, wherein the element (23; 23') forming an elastic reserve is placed between the crimping ring and the outer layer of the hose or between the rigid tubular end piece and the corrugated inner tube.

4. Flexible hose according to one of the preceding claims, wherein the corrugated inner tube (3) is formed from a thermoplastic material selected from the group comprising in particular PA 6 and PA 6.6.

5. Flexible hose according to one of the preceding claims, wherein the intermediate reinforcing layer (5) is a braided or covered textile fabric layer.

6. Flexible hose according to one of claims 1 to 4, wherein the intermediate reinforcing layer (5) is a metal fabric layer.

7. Flexible hose according to one of the preceding claims, wherein the outer protective layer (7) is made of a thermoplastically transformable cross-linked elastomer such as VEGAPRENE® which comprises at least one elastomer that can be polymerised by a metallocene catalyst and a graft polyolefin.

8. Flexible hose according to one of claims 1 to 6, wherein the outer protective layer (7) is made from a thermoplastic elastomeric material such as a TPO (EPDM/PP, NBR/PP, IIR/PP) or a TPU.

9. Flexible hose according to one of the preceding claims, wherein the corrugated inner tube (3) has a thickness of the order of 0.5 mm.

10. Flexible hose according to one of the preceding claims, wherein the sealing element (23) is a rubber sleeve.

11. Flexible hose according to one of the preceding claims, wherein the corrugated inner tube (3) is a multi-layer tube and/or is plasma-treated, for example.

12. Air-conditioning circuit, particularly for a motor vehicle, **characterised in that** it comprises at least one flexible hose (1) as defined in one of the preceding claims.

## Patentansprüche

1. Biegsamer Schlauch für einen Klimakreislauf eines Kraftfahrzeugs, wobei dieser Schlauch gebildet ist: durch ein geriffeltes Innenrohr (3), das aus Thermoplastmaterial umgesetzt ist für den Kontakt mit dem zu transportierenden Fluid und Welligkeiten mit einer Höhe kleiner als 2 mm aufweist, eine Verstärkungs-Zwischenschicht (5), die an den Welligkeiten (10) des geriffelten Innenrohres (3) angebracht sind und in diese Welligkeiten nicht eintritt, und eine äußere Schutzschicht (7), die auf die Verstärkungs-Zwischenschicht (5) durch Gummiverbindung aufgebracht ist oder nicht und die aus einem thermoplastischen Elastomermaterial ausgeführt ist, das gegenüber Wasserdampf dicht ist, eine Dicke zwischen 0,6 und 1,5mm und eine Permeabilität kleiner als 40g/m²/72h aufweist, und der zumindest an einem Ende ein starres, rohrförmiges Endstück (17), das teilweise in das Innere des geriffelten Rohres (3) eingeführt ist, einen Einfassring (19), der um die äußere Schutzschicht (7) herum angebracht ist, und eine Einrichtung (23, 23') zum Absichern der Dichtheit, die durch ein Element (23') aus einem Elastomermaterial, das eine Elastizitätsreserve bildet, mit einer Dicke zwischen 1,5 und 2,5 mm gebildet ist, aufweist.

2. Schlauch nach Anspruch 1, wobei das geriffelte Innenrohr (3) an zumindest einem Endabschnitt des Schlauchs glatt ist und einen Außendurchmesser aufweist, der im Wesentlichen gleich dem Außendurchmesser der Welligkeiten (10) des geriffelten Innenrohres ist, um Ladungs- bzw. Beschickungsverluste zu begrenzen.

3. Schlauch nach Anspruch 1 oder 2, wobei das eine Elastizitätsreserve bildende Element (23; 23') zwischen dem Einfassring und der Außenschicht des Schlauchs oder zwischen dem starren rohrförmigen Endstück und dem geriffelten Innenrohr angeordnet ist.

4. Schlauch nach einem der vorhergehenden Ansprüche, wobei das geriffelte Innenrohr (3) von einem Thermoplastmaterial ausgehend umgesetzt ist, das aus der Gruppe ausgewählt wurde, die insbesondere PA6 und PA 6,6 aufweist.

5. Schlauch nach einem der vorhergehenden Ansprüche, wobei die Verstärkungs-Zwischenschicht (5) ein umflochtener oder umsponnener Textilmantel ist.

6. Schlauch nach einem der Ansprüche 1 bis 4, wobei die Verstärkungs-Zwischenschicht (5) ein Metallmantel ist.

7. Schlauch nach einem der vorhergehenden Ansprüche, wobei die äußere Schutzschicht (7) aus einem netzartigen Elastomer mit thermoplastischer Umwandlung gebildet ist, wie z.B. VEGAPRENE ®, das zumindest ein Elastomer mit Polymerisation durch einen Metallocen-Katalysator und veredeltes Polyolefin aufweist.

8. Schlauch nach einem der Ansprüche 1 bis 6, wobei die äußere Schutzschicht (7) von einem thermoplastischen Elastomermaterial ausgehend umgesetzt ist, wie TPO (EPDM/PP, NBR/PP, IIR/PP) oder ein TPU.

9. Schlauch nach einem der vorhergehenden Ansprüche, wobei das geriffelte Innenrohr (3) eine Dicke in der Größenordnung von 0,5 mm hat.

10. Schlauch nach einem der vorhergehenden Ansprüche, wobei das Dichtelement (23) eine Hülse aus Kautschuk ist.

11. Schlauch nach einem der vorhergehenden Ansprüche, wobei das geriffelte Innenrohr (3) ein Mehrschichtrohr ist und/oder ein beispielsweise mit Plasma behandeltes Rohr ist.

12. Klimatisierungskreislauf, insbesondere für ein Kraftfahrzeug, **dadurch gekennzeichnet, dass** dieser zumindest einen biegsamen Schlauch (1) entsprechend der Definition von einem der vorhergehenden Ansprüche aufweist.
